(19) Europäisches Patentamt / European Patent Office / Office européen des brevets

(11) **EP 4 738 160 A1**

(12) **DEMANDE DE BREVET EUROPEEN**

(43) Date de publication:
06.05.2026 Bulletin 2026/19

(21) Numéro de dépôt: 25209204.4

(22) Date de dépôt: 16.10.2025

(51) Classification Internationale des Brevets (IPC):
*G06F 21/44* (2013.01)  *H04L 9/32* (2006.01)
*H04L 9/40* (2022.01)  *H04W 12/069* (2021.01)

(52) Classification Coopérative des Brevets (CPC):
G06F 21/44; H04L 9/3218; H04L 9/3221;
H04L 9/3271; H04L 63/0823; H04W 12/069

(84) Etats contractants désignés:
AL AT BE BG CH CY CZ DE DK EE ES FI FR GB
GR HR HU IE IS IT LI LT LU LV MC ME MK MT NL
NO PL PT RO RS SE SI SK SM TR
Etats d'extension désignés:
BA
Etats de validation désignés:
GE KH LA MA MD TN

(30) Priorité: 29.10.2024 FR 2411830

(71) Demandeur: STMicroelectronics International
N.V.
1228 Plan-les-Ouates, Geneva (CH)

(72) Inventeurs:
• SIMON, Thierry
1300 Wavre (BE)
• PEETERS, Michael
1320 Tourinnes-la-Grosse (BE)

(74) Mandataire: Cabinet Beaumont
4, Place Robert Schuman
B.P. 1529
38025 Grenoble Cedex 1 (FR)

(54) **PROCEDE D'AUTHENTIFICATION**

(57) La présente description concerne un procédé d'authentification d'un premier dispositif (P) auprès d'un deuxième dispositif (V), le premier dispositif (P) stockant une première liste (M200) de groupes de données, comprenant les étapes suivantes :

A) Envoyer, par le deuxième dispositif (V) au premier dispositif (P), une deuxième liste (I200) d'informations relatives à des données ;

B) Envoyer, par le premier dispositif (P) au deuxième dispositif (V), un troisième liste (M(I200)) d'images, par une première fonction (g), de données de ladite première liste (M200) dont les informations sont celles de ladite deuxième liste (I200) ; et

C) Vérifier, par le deuxième dispositif (V), si les images des données de ladite troisième liste (M(I200)) sont conformes aux données d'une quatrième liste (f(M200)) de groupes de données correspondant à l'image de la première liste (M200) par une deuxième fonction (f) dont les informations sont comprises dans la deuxième liste (I200).

Fig 2

EP 4 738 160 A1

**Description**

Domaine technique

La présente description concerne de façon générale les circuits et dispositifs électroniques, et plus particulièrement la sécurité des circuits et dispositifs électroniques. La présente description se rapporte plus précisément à la mise en oeuvre d'un procédé d'authentification permettant, par exemple, à plusieurs dispositifs électroniques de démarrer une communication fiable.

Technique antérieure

Une communication entre deux dispositifs, ou circuits, électroniques est souvent précédée d'une phase d'authentification. Pendant cette phase, un procédé d'authentification, mis en oeuvre par les deux dispositifs, permet de vérifier si ces deux dispositifs sont autorisés à communiquer ensemble.

Les procédés d'authentification sont souvent utilisés lors de communications entre un dispositif de type terminal et un équipement ou dispositif électronique de type périphérique, par exemple un consommable ou un accessoire. Le procédé d'authentification permet, dans ce cas, de valider l'accès du dispositif de type périphérique aux données et/ou à des fonctionnalités du dispositif de type terminal. Le procédé d'authentification est un premier moyen de protection contre les dispositifs malveillants essayant d'accéder à des données et/ou à des fonctionnalités d'autres dispositifs.

Il serait souhaitable de pouvoir améliorer, au moins en partie, les procédés d'authentification connus.

Résumé de l'invention

Il existe un besoin pour des procédés d'authentification plus sécurisés, et permettant une authentification plus robuste d'un circuit ou d'un dispositif électronique auprès d'un autre circuit ou dispositif électronique, et en particulier une authentification plus robuste face aux attaques par injection de fautes.

En particulier, il existe un besoin d'empêcher qu'un clone d'un dispositif électronique puisse s'authentifier à sa place.

Il existe un besoin pour des circuits et dispositifs électroniques mettant en oeuvre des procédés d'authentification plus sécurisés.

Un mode de réalisation pallie tout ou partie des inconvénients des procédés d'authentification connus.

Un mode de réalisation prévoit un procédé d'authentification de type Vérificateur/Prouveur dans lequel un dispositif prouveur stocke beaucoup plus de données que de données qui sont effectivement utilisées et potentiellement divulguées pendant la mise en oeuvre d'un procédé d'authentification.

Selon un premier aspect, un mode de réalisation prévoit un procédé d'authentification d'un premier dispositif auprès d'un deuxième dispositif, le premier dispositif stockant une première liste de groupes de données, comprenant les étapes suivantes :

A) Envoyer, par le deuxième dispositif au premier dispositif, une deuxième liste d'informations relatives à des données ;
B) Envoyer, par le premier dispositif au deuxième dispositif, une troisième liste d'images, par une première fonction, de données de ladite première liste dont les informations sont celles de ladite deuxième liste; et
C) Vérifier, par le deuxième dispositif, si les images des données de ladite troisième liste sont conformes aux données d'une quatrième liste de groupes de données correspondant à l'image de la première liste par une deuxième fonction dont les informations sont comprises dans la deuxième liste.

Un autre mode de réalisation prévoit un dispositif électronique adapté à être le premier dispositif dans un procédé d'authentification du premier dispositif auprès d'un deuxième dispositif, le premier dispositif stockant une première liste de groupes de données, et ledit procédé comprenant les étapes suivantes :

A) Envoyer, par le deuxième dispositif au premier dispositif, une deuxième liste d'informations relatives à des données ;
B) Envoyer, par le premier dispositif au deuxième dispositif, une troisième liste d'images, par une première fonction, de données de ladite première liste dont les informations sont celles de ladite deuxième liste ; et
C) Vérifier, par le deuxième dispositif, si les images des données de ladite troisième liste sont conformes aux données d'une quatrième liste de groupes de données correspondant à l'image de la première liste par une deuxième fonction dont les informations sont comprises dans la deuxième liste.

Un autre mode de réalisation prévoit un dispositif électronique adapté à être le deuxième dispositif dans le procédé d'authentification d'un premier dispositif auprès du deuxième dispositif, le premier dispositif stockant une première liste de groupes de données, et ledit procédé comprenant les étapes suivantes :

A) Envoyer, par le deuxième dispositif au premier dispositif, une deuxième liste d'informations relatives à des données ;

B) Envoyer, par le premier dispositif au deuxième dispositif, une troisième liste d'images, par une première fonction, de données de ladite première liste dont les informations sont celles de ladite deuxième liste ; et

C) Vérifier, par le deuxième dispositif, si les images des données de ladite troisième liste sont conformes aux données d'une quatrième liste de groupes de données correspondant à l'image de la première liste par une deuxième fonction dont les informations sont comprises dans la deuxième liste.

Selon un mode de réalisation, le procédé comprend, en outre, une étape D), précédant l'étape A), d'envoi, par le premier dispositif au deuxième dispositif, de ladite quatrième liste de groupes de données.

Selon un mode de réalisation, le procédé comprend, en outre, une étape E), adaptée à être exécutée entre les étapes B) et C), de suppression, par le premier dispositif, de ladite première liste les groupes de données entiers des données dont les informations font partie de ladite troisième liste.

Selon un mode de réalisation, ladite deuxième liste est une liste d'index de données.

Selon un mode de réalisation, ladite deuxième liste est une liste de valeurs de données.

Selon un mode de réalisation, ledit procédé comprend, entre l'étape D) et l'étape A), une étape F) dans laquelle ledit premier dispositif envoie, au deuxième dispositif, une cinquième liste d'informations relatives à des groupes de données de ladite quatrième liste qui ont déjà été utilisés pour mettre en oeuvre un procédé d'authentification, et à l'étape A) la deuxième liste ne comprend pas d'information déjà comprise dans ladite cinquième liste d'informations.

Selon un mode de réalisation, la cinquième liste comprend des couples comprend un index de données et la valeur de ladite données associées audit index de données.

Selon un mode de réalisation, ledit procédé comprend, en outre, après l'étape F), une étape G), mise en oeuvre par le deuxième dispositif, de vérification de ladite cinquième liste.

Selon un mode de réalisation, à l'étape D), le premier dispositif envoie, en outre, un certificat, et ledit procédé comprend, après l'étape D), une étape H), mise en oeuvre par ledit deuxième dispositif, de vérification dudit certificat.

Selon un mode de réalisation, ledit premier dispositif comprend un compteur adapté à compter le nombre de fois que le premier dispositif met en oeuvre ledit procédé d'authentification.

Selon un mode de réalisation, lorsque ledit compteur dépasse une valeur maximale, ledit premier dispositif arrête la mise en oeuvre du procédé d'authentification et n'est pas authentifié auprès du deuxième dispositif.

Selon un mode de réalisation, ledit deuxième dispositif est adapté à vérifier la valeur dudit compteur.

Selon un mode de réalisation, si la vérification de l'étape C) est un succès alors le premier dispositif est authentifié auprès du deuxième dispositif, et si la vérification de l'étape C) n'est pas un succès alors le premier dispositif n'est pas authentifié auprès du deuxième dispositif.

Un autre mode de réalisation prévoit un système d'authentification comprenant un premier dispositif décrit précédemment et un deuxième dispositif décrit précédemment.

Un autre mode de réalisation prévoit un produit programme d'ordinateur comprenant des instructions de code de programme pour l'exécution des étapes du procédé décrit précédemment en tant que le premier dispositif ou en tant que le deuxième dispositif lorsque ledit programme est exécuté sur un ordinateur.

Selon un deuxième aspect, un mode de réalisation prévoit un procédé d'authentification d'un premier dispositif auprès d'un deuxième dispositif, le premier dispositif stockant une première liste de groupes de données, comprenant les étapes suivantes :

A) Envoyer, par le premier dispositif au deuxième dispositif, une deuxième liste de groupes de données correspondant à l'image de la première liste par une première fonction ;

B) Envoyer, par le premier dispositif au deuxième dispositif, un quatrième liste d'images, par une deuxième fonction, de données de ladite première liste dont les informations sont celles de ladite troisième liste ; et

C) Vérifier, par le deuxième dispositif, si les images des données de ladite quatrième liste sont conformes aux données de ladite deuxième liste dont les informations sont comprises dans la troisième liste.

Un mode de réalisation prévoit un dispositif adapté à être le premier dispositif selon le procédé d'authentification précédent.

Un mode de réalisation prévoit un dispositif adapté à être le deuxième dispositif selon le procédé d'authentification précédent.

Un mode de réalisation prévoit un système adapté à comprendre les dispositifs adaptés à mettre en oeuvre le procédé d'authentification précédent.

Un mode de réalisation prévoit un dispositif adapté à être le deuxième dispositif selon le procédé d'authentification précédent.

Un mode de réalisation prévoit un produit programme d'ordinateur comprenant des instructions de code de programme pour l'exécution des étapes du procédé décrit précédemment en tant que le premier dispositif et/ou en tant que le deuxième dispositif lorsque ledit programme est exécuté sur un ordinateur.

Les alternatives décrites en relation avec le premier aspect sont applicables aux modes de réalisation du deuxième aspect dans la mesure du possible.

Selon un troisième aspect, un mode de réalisation prévoit un procédé d'authentification d'un premier dispositif auprès d'un deuxième dispositif, le premier dispositif stockant une première liste de groupes de données, comprenant les étapes suivantes :

A) Envoyer, par le premier dispositif au deuxième dispositif, une deuxième liste de groupes de données correspondant à l'image de la première liste par une première fonction ;
B) Envoyer, par le deuxième dispositif au premier dispositif, une troisième liste d'informations relatives à des données ;
C) Envoyer, par le premier dispositif au deuxième dispositif, un quatrième liste d'images, par une deuxième fonction, de données de ladite première liste dont les informations sont celles de ladite troisième liste ; et
D) Vérifier, par le deuxième dispositif, si les images des données de ladite quatrième liste sont conformes aux données de ladite deuxième liste dont les informations sont comprises dans la troisième liste.

Un mode de réalisation prévoit un dispositif adapté à être le premier dispositif selon le procédé d'authentification précédent.

Un mode de réalisation prévoit un dispositif adapté à être le deuxième dispositif selon le procédé d'authentification précédent.

Un mode de réalisation prévoit un système adapté à comprendre les dispositifs adaptés à mettre en oeuvre le procédé d'authentification précédent.

Un mode de réalisation prévoit un dispositif adapté à être le deuxième dispositif selon le procédé d'authentification précédent.

Un mode de réalisation prévoit un produit programme d'ordinateur comprenant des instructions de code de programme pour l'exécution des étapes du procédé décrit précédemment en tant que le premier dispositif et/ou en tant que le deuxième dispositif lorsque ledit programme est exécuté sur un ordinateur.

Les alternatives décrites en relation avec le premier aspect sont applicables aux modes de réalisation du troisième aspect dans la mesure du possible.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente un exemple de dispositif électronique adapté à mettre en oeuvre les modes de mise en oeuvre de procédé d'authentification décrits en relation avec les figures 2 à 4 ;
la figure 2 représente un schéma bloc illustrant un mode de mise en oeuvre d'un procédé d'authentification d'un premier dispositif auprès d'une deuxième dispositif ;
la figure 3 représente un schéma bloc illustrant la mise en oeuvre d'une étape du mode de mise en oeuvre de la figure 1 ; et
la figure 4 représente un schéma bloc illustrant un autre mode de mise en oeuvre d'un procédé d'authentification d'un premier dispositif auprès d'un deuxième dispositif.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Les modes de réalisation décrits ci-après concernent la mise en oeuvre d'un procédé d'authentification permettant d'authentifier un premier dispositif électronique auprès d'un deuxième dispositif électronique, par exemple, en vue d'une future communication entre ces premier et deuxième dispositifs. Ces modes de réalisation sont, plus particulièrement, des procédés d'authentification du type Vérificateur/Prouveur (Verifier/Prover), aussi appelé de type Vérificateur/Candidat, dans lequel un dispositif vérificateur, ici le deuxième dispositif, choisit une ou plusieurs données qui doivent être révélées par le dispositif prouveur, ici le premier dispositif, et lui demande de les révéler. Le dispositif prouveur renvoie ensuite soit la ou les données demandées, soit le résultat de l'application d'une transformation à ces données au dispositif vérificateur pour qu'il vérifie si le dispositif prouveur a en sa possession les bonnes données. Si le résultat de la vérification est correct alors le dispositif prouveur est authentifié auprès du dispositif vérificateur. On appelle système d'authentification un système électronique comprenant un dispositif vérificateur et un dispositif prouveur.

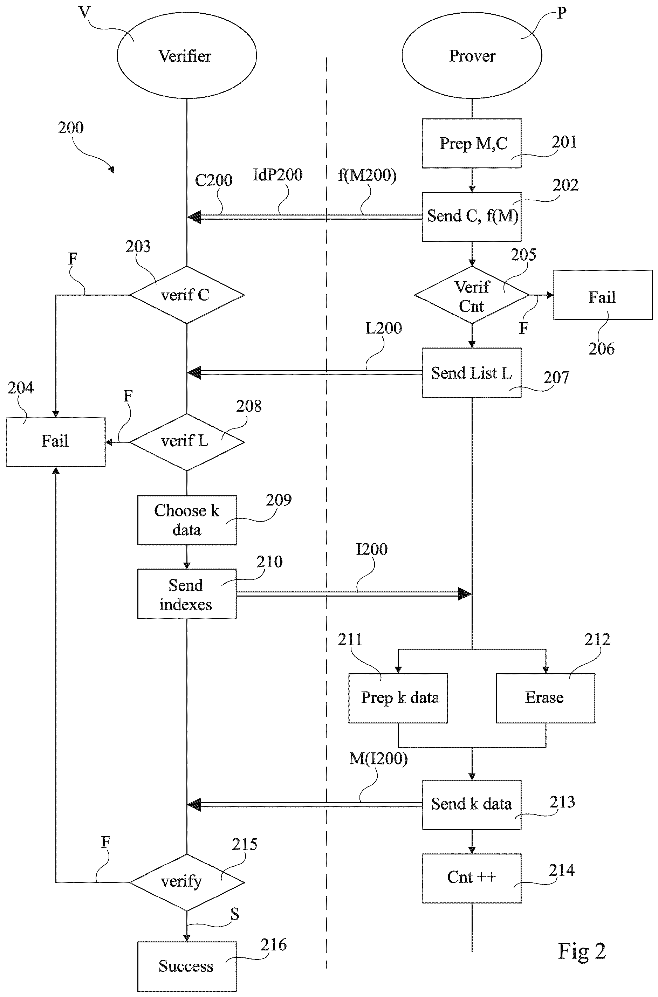

Les modes de réalisation décrits ci-après concernent plus particulièrement la mise en oeuvre d'un procédé d'authentification dans lequel le dispositif vérificateur choisit une donnée parmi un groupe de données transmis par le dispositif prouveur pour mettre en oeuvre la vérification. L'élément clé de ces modes de réalisation est que le dispositif prouveur stocke beaucoup plus de données que de données qui sont effectivement utilisées et potentiellement divulguées pendant la mise en oeuvre d'un procédé d'authentification. Au lieu de stocker des données qui sont toutes utilisées, chaque donnée est comprise dans un groupe de données, appelé ci-après tuples de données, dont seulement une partie des données est utilisée pour la mise en oeuvre d'une authentification. Une fois qu'une ou plusieurs données d'un tuple sont utilisées par la mise en oeuvre d'une authentification, les autres données du tuple qui ne sont pas utilisées sont supprimées. Un tel procédé d'authentification est décrit en détail en relation avec les figures 2 à 4. Un procédé de ce type est particulièrement efficace contre des attaques malveillantes dans lequel un dispositif espion, aussi appelé clone, essaye de prendre la place d'un dispositif prouveur. En effet, grâce aux modes de réalisation décrits ci-après, il est impossible pour un dispositif espion d'avoir accès ou d'apprendre la totalité des données secrètes, ou secrets, stockée par un dispositif prouveur en observant les authentifications qu'il a mis en oeuvre.

De plus, les modes de réalisation décrits ci-après sont tout particulièrement adaptés à l'authentification de dispositifs électroniques types "consommables" auprès d'un dispositif électronique dit "terminal". De tels dispositifs sont par exemple des cartouches d'encre (consommable) adaptées à fonctionner sur un certain type d'imprimante (terminal), ou par exemple une carte adaptée à fonctionner avec un terminal de paiement.

De plus, les modes de réalisation décrits ci-dessus sont particulièrement adaptés pour être utilisés dans tout type de marchés industriels où la mise en oeuvre d'une authentification est nécessaire. Plus particulièrement, un tel procédé d'authentification peut être destiné à :

- l'industrie automobile, par exemple dans le domaine de l'électrification automobile ou dans le domaine des systèmes avancés d'aide à la conduite (Advanced Driver Assistance Systems - ADAS) ;
- l'industrie industrielle, par exemple dans le domaine de l'énergie verte, dans le domaine de l'électrification des infrastructures, de l'internet des objets (Internet of Things
- IoT) et des maisons intelligentes (SmartHome), où la consommation d'électricité et d'énergie et l'échange de données sont des éléments clés ;
- l'industrie de l'électronique personnelle, par exemple dans le domaine de la téléphonie mobile et de l'internet des objets (Internet of Things - IoT), ainsi que dans le domaine des interfaces haut débit ; et
- l'industrie des équipements de communication, des ordinateurs et des périphériques, par exemple dans le domaine des infrastructures et des centres de données (Data Centers), et dans le domaine des satellites en orbite terrestre basse (Low Earth Orbit - LEO).

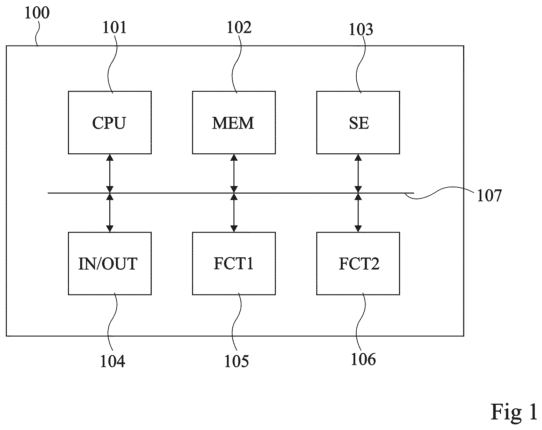

La figure 1 est un schéma bloc représentant, très schématiquement, une architecture d'un exemple d'un dispositif électronique 100 adapté à mettre en oeuvre un procédé d'authentification selon un mode de réalisation. Le dispositif 100 peut être, indifféremment, un dispositif vérificateur ou un dispositif prouveur dudit procédé d'authentification. Les procédés d'authentification sont décrits en relation avec les figures 2 à 4.

Selon un exemple, le dispositif électronique 100 comprend un processeur 101 (CPU) adapté à mettre en oeuvre différents traitements de données stockées dans des mémoires et/ou fournies par d'autres circuits du dispositif 100. Selon un mode de réalisation, le processeur 101 est adapté à mettre en oeuvre un procédé d'authentification.

Selon un exemple, le dispositif électronique 100 comprend, en outre, une ou plusieurs mémoires 102 (MEM) de différents types, parmi lesquelles, par exemple, une mémoire non volatile, une mémoire volatile, et/ou une mémoire morte. Chaque mémoire 102 est adaptée à stocker différents types de données. Selon un mode de réalisation, la ou les mémoires 102 sont adaptées à stocker, de préférence de manière sécurisée, des données permettant la mise en oeuvre d'un procédé d'authentification.

Selon un exemple, le dispositif électronique 100 comprend, en outre, un élément sécurisé 103 (SE) adapté à traiter des données sensibles et/ou secrètes. L'élément sécurisé 103 peut comprendre son ou ses propres processeurs, son ou ses propres mémoires, etc. Selon un exemple de réalisation, l'élément sécurisé 101 peut être adapté à mettre en oeuvre un procédé d'authentification, ou, au moins, à stocker des données permettant la mise en oeuvre d'un procédé d'authentification.

Selon un exemple, le dispositif électronique 100 peut comprendre, en outre, un ou plusieurs circuits d'interface 104 (IN/OUT) adaptés à envoyer et/ou à recevoir des données provenant de l'extérieur du dispositif 100. Les circuits d'interface 104 peuvent être, en outre, adaptés à mettre en oeuvre un affichage de données, par exemple, un écran d'affichage. Selon un exemple de réalisation, le ou les circuits d'interface 104 sont adaptés à mettre en oeuvre un procédé d'authentification, ou, au moins, à stocker des données permettant la mise en oeuvre d'un procédé d'authentification.

Selon un exemple, le dispositif électronique 100 comprend, en outre, différents circuits 105 (FCT1) et 106 (FCT2) adaptés à réaliser différentes fonctions. A titre d'exemple, les circuits 105 et 106 peuvent comprendre des circuits de mesures, des circuits de conversion de données, etc. Selon un mode de réalisation, les circuits 105 et 106 peuvent comprendre un ou plusieurs circuits adaptés à mettre en oeuvre un procédé d'authentification, ou, au moins, à stocker des données permettant la mise en oeuvre d'un procédé d'authentification.

Selon un exemple, le dispositif électronique 100 comprend, en outre, un ou plusieurs bus de données 107 adaptés à transférer des données entre ses différents composants.

Selon un mode de réalisation, un système comprenant deux dispositifs du type du dispositif 100 peut être adapté à mettre en oeuvre un procédé d'authentification selon un mode de réalisation. Un tel système est appelé un système d'authentification.

De manière plus générale, le dispositif électronique 100 peut être un ordinateur qui comprend des moyens ou des instructions de code de programme pour l'exécution des étapes d'un procédé d'authentification selon un mode de réalisation. Selon un premier exemple, le dispositif électronique 100 peut être un ordinateur qui comprend des moyens ou des instructions de code de programme pour l'exécution des étapes d'un procédé d'authentification selon un mode de réalisation en tant que dispositif prouveur. Selon un deuxième exemple, le dispositif électronique 100 peut être un ordinateur qui comprend des moyens ou des instructions de code de programme pour l'exécution des étapes d'un procédé d'authentification selon un mode de réalisation en tant que dispositif vérificateur. Selon un troisième exemple, le dispositif électronique 100 peut être un ordinateur qui comprend des moyens ou des instructions de code de programme pour l'exécution des étapes d'un procédé d'authentification selon un mode de réalisation en tant que dispositif prouveur et en tant que dispositif vérificateur.

La figure 2 est un schéma bloc illustrant un premier mode de mise en oeuvre d'un procédé d'authentification 200 permettant d'authentifier un premier dispositif électronique P, aussi appelé dispositif prouveur P (Prover), auprès d'un deuxième dispositif électronique V (Verifier), aussi appelé dispositif vérificateur V. Autrement dit, le procédé d'authentification 200 est adapté à être mis en oeuvre par un système d'authentification comprenant les dispositifs P et V. Selon un mode de réalisation, les dispositifs P et V sont du type du dispositif 100 décrit en relation avec la figure 1.

Comme décrit précédemment, le procédé d'authentification 200 est un procédé de type Vérificateur/Prouveur.

Une étape initiale 201 (Prep M, C), mise en oeuvre par le dispositif P, est une étape de préparation de données utilisées pour les étapes successives du procédé 200. Cette étape peut être mise en oeuvre une fois, puis peut servir pour plusieurs mises en oeuvre du procédé d'authentification 200.

Selon un mode de réalisation, pendant cette étape initiale 201, le dispositif prouveur P génère des données lui permettant de mettre en oeuvre le procédé d'authentification 200. Plus particulièrement, le dispositif P génère une liste M200 de s groupes de données, aussi appelés tuples de données, s étant un entier supérieur ou égal à un. Chaque groupe de la liste M200 comprend t données, t étant un entier strictement supérieur à un. A titre d'exemple, les données comprises dans la liste M200 sont des données binaires.

Pour la suite de la description, la liste M200 peut être représentée sous forme de matrice comprenant s lignes et t colonnes, dans laquelle :

- chaque coefficient $m200_{ij}$ de la matrice, i étant un entier compris entre 0 et s-1 et j étant un entier compris entre 0 et t-1, représente une donnée ; et
- chaque ligne de la matrice représente un groupe de t données comme défini précédemment.

Ainsi, la liste M200 peut être représentée par la formule mathématique suivante :

[Math 1]

$$M = \left(m200_{ij}\right)_{0 \le i \le s-1, 0 \le j \le t-1}$$

Le dispositif prouveur P est, en outre, adapté à mettre en oeuvre une fonction f que le dispositif V est aussi capable de mettre en oeuvre. Selon un mode de réalisation, la fonction f est une fonction à sens unique, c'est-à-dire une fonction non inversible ou une fonction quasi à sens unique ou quasi non inversible, c'est-à-dire une fonction pour lesquelles une opération d'inversion demande des ressources de calcul importantes. Selon un exemple, la fonction f peut être une fonction d'exponentiation modulaire, une fonction de multiplication scalaire sur une courbe elliptique, une fonction de hachage. D'autres exemples de fonction f sont à la portée de la personne du métier.

De plus, pendant cette étape initiale 201, le dispositif prouveur P peut générer une image f(M200) des données de la liste M200 par la fonction f. Pour cela, la fonction f est appliquée à chaque donnée des groupes de données de la liste M200. Ainsi, l'image f(M200) de la liste M200 peut être représentée sous forme matricielle par la formule mathématique suivante :

[Math 2]

$$f(M) = \left(f(m200_{ij})\right)_{0 \le i \le s-1, 0 \le j \le t-1}$$

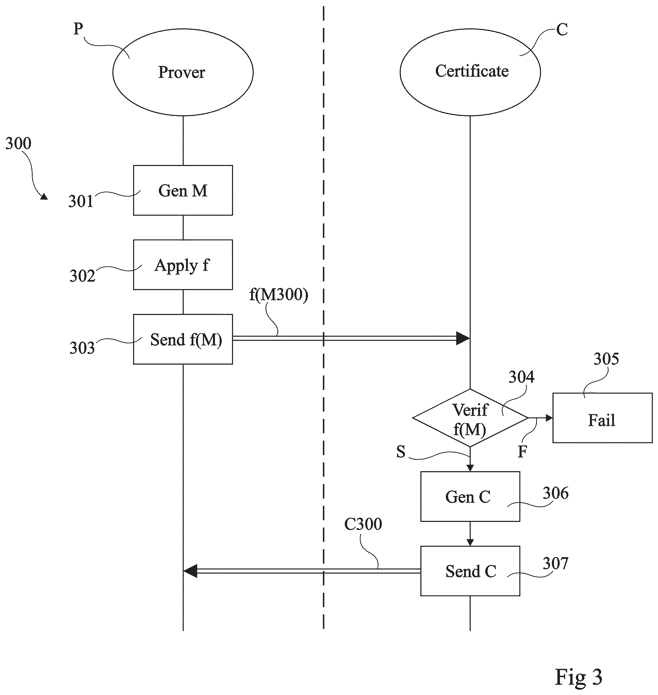

De plus, pendant cette étape initiale 201, le dispositif prouveur P peut, par exemple, se faire certifier par un dispositif certificateur, c'est-à-dire que le dispositif prouveur P peut demander à un dispositif certificateur de lui générer un certificat. Cette opération de certification a pour but d'obtenir une preuve de confiance de la part d'un dispositif considéré comme fiable, appelé ci-après dispositif certificateur. A l'issue d'une opération de certification, le dispositif P obtient une donnée de certification C200, ou certificat C200. Selon un exemple, la donnée de certification est dépendante d'une donnée d'identification IdP200, ou identifiant IdP200, du dispositif prouveur P. Selon un exemple, la donnée de certification est, en outre, dépendante des données de la liste f(M200). Selon un exemple, la donnée de certification est, en outre, dépendante de la fonction f. Un exemple d'une étape de certification est décrit en détail en relation avec la figure 3.

A une étape 202 (Send C), successive à l'étape 201, mise en oeuvre par le dispositif P, le procédé d'authentification 200 commence par l'envoi de données par le dispositif prouveur P au dispositif vérificateur V. Selon un exemple, le dispositif P envoie son identifiant IdP200, son certificat C200 et l'image f(M200) de la liste M200 par la fonction f.

A une étape 203 (Verif C, f(M)), successive à l'étape 202, mise en oeuvre par le dispositif V, le dispositif V reçoit les données envoyées à l'étape 202, c'est-à-dire, par exemple, l'identifiant IdP200, le certificat C200 et l'image f(M200), et effectue une vérification de ces données. Selon un mode de réalisation, à l'étape 203, le dispositif V met en oeuvre une étape de vérification du certificat C200. Selon un exemple, à l'étape 203, le dispositif V met en oeuvre une étape de vérification de l'identifiant IdP200. Selon un exemple, à l'étape 203, le dispositif V met en oeuvre une étape de vérification de l'image f(M200). Si la ou les vérifications mises en oeuvre indiquent que l'une des données reçues n'est pas conforme selon un ou plusieurs critères (sortie F de l'étape 203), alors l'étape suivante est une étape 204 (Fail), sinon le procédé d'authentification continue.

A l'étape 204, mise en oeuvre par le dispositif V, le dispositif V a déterminé qu'une étape de vérification avait donné un résultat négatif. Cela indique qu'au moins une des données fournies par le dispositif P n'est pas conforme et que l'authentification du dispositif P n'est pas possible auprès du dispositif V. Le procédé d'authentification s'arrête donc et se conclut par un échec de l'authentification du dispositif P auprès du dispositif V.

A une étape 205 (Verif Cnt), successive à l'étape 202, mise en oeuvre par le dispositif P, le dispositif P vérifie la valeur Cnt200 d'un compteur interne. Ce compteur interne permet de suivre le nombre de fois que le dispositif P met en oeuvre le procédé d'authentification 200. Ainsi, à chaque fois que le dispositif P met en oeuvre, avec succès, le procédé d'authentification 200 il incrémente la valeur Cnt200 du compteur interne.

Selon une variante de réalisation, le compteur interne pourrait permettre de suivre le nombre de fois que le dispositif P met en oeuvre le procédé d'authentification 200 avec ou sans succès. Ainsi, à chaque fois que le dispositif P met en oeuvre le procédé d'authentification 200 et dévoile un ou plusieurs secrets, le compteur peut être incrémenté.

Ainsi, à l'étape 205, le dispositif P vérifie que la valeur Cnt200 ne dépasse pas une valeur maximale Cnt200Max. Si la valeur Cnt200 est égale ou supérieure à la valeur maximale Cnt200Max (sortie F de l'étape 205), alors l'étape suivante est une étape 206 (Fail), sinon le procédé d'authentification continue. La valeur maximale Cnt200Max est définie par rapport au nombre de groupes de données que comprend la liste M200. Selon un mode de réalisation, la valeur maximale Cnt200Max est inférieure ou égale à l'entier s.

Selon une variante de réalisation l'étape 205 peut être mise en oeuvre à d'autres moments du procédé d'authentification 200, comme par exemple, avant l'exécution de l'étape 202, après l'exécution d'une étape 207 décrite ci-après, ou avant l'exécution d'une étape 213 décrite ci-après.

A l'étape 206, mise en oeuvre par le dispositif P, successive à l'étape 205, le dispositif P a déterminé qu'il avait mis en oeuvre le procédé d'authentification trop de fois. L'authentification du dispositif P n'est pas possible auprès du dispositif V. Le procédé d'authentification s'arrête donc et se conclut par un échec de l'authentification du dispositif P auprès du dispositif V.

A une étape 207 (Send List L), successive à l'étape 205, mise en oeuvre par le dispositif P, le dispositif prouveur P envoie au dispositif vérificateur V une liste L200 permettant d'identifier des groupes de données de la liste M200 qui ont déjà été utilisés précédemment pour mettre en oeuvre le procédé d'authentification 200. Selon un exemple, lorsque le dispositif P met en oeuvre son premier procédé d'authentification 200, la liste L200 est une liste vide.

Selon un mode de réalisation, la liste L200 comprend des index de groupes de données de la liste M200 déjà utilisés. On appelle ici index, ou indice, d'un groupe de données le numéro de la ligne correspondant au groupe dans la matrice représentant la liste M200. Autrement dit, l'index d'un groupe de données est donné par la valeur de l'entier i, défini précédemment, qui lui est associée.

Selon un autre mode de réalisation, la liste L200 comprend des index de groupes de données déjà utilisés, mais comprend aussi des valeurs de données de ces groupes déjà utilisées pour mettre en oeuvre le procédé d'authentification 200. Dans ce cas, on peut dire que la liste L200 comprend des couples comprenant chacun l'index d'un groupe de données déjà utilisé et la ou les valeurs des données dudit groupe de données déjà utilisées.

De plus, de manière optionnelle, à l'étape 207, le dispositif prouveur P peut également envoyer au dispositif vérificateur V la valeur Cnt200 de son compteur interne.

A une étape 208 (Verif L), successive à l'étape 207, mise en oeuvre par le dispositif V, le dispositif vérificateur V a reçu la liste L200 et met en oeuvre une ou plusieurs opérations de vérification de cette liste L200.

Selon un premier exemple, le dispositif vérificateur V vérifie si le nombre d'index de la liste L200 ne dépasse pas le nombre de groupes de données de l'image f(M200) fournie précédemment. Selon une variante, si le dispositif vérificateur a également reçu la valeur Cnt200 du compteur interne du dispositif prouveur P, le dispositif vérificateur V vérifie que le nombre d'index de la liste L200 est compatible avec la valeur Cnt200. Plus particulièrement, si chaque mise en oeuvre du procédé d'authentification 200 utilise k données comprises dans un groupe, k étant un entier compris entre 1 et l'entier s-1, alors le nombre d'élément de la liste L200, noté #(L200), suit l'inégalité mathématique suivante :

[Math 3]

$$\#(L200) \leq Cnt200 * k \leq (Cnt200Max - 1) * k$$

Selon un deuxième exemple, si la liste L200 comprend les valeurs des données des groupes déjà utilisés, le dispositif vérificateur V vérifie si ces valeurs de données sont correctes. Pour cela, le dispositif vérificateur V peut mettre en oeuvre la fonction f et l'appliquer aux données reçues.

Selon un troisième exemple, si la liste L200 comprend les valeurs des données des groupes déjà utilisés, le dispositif vérificateur V vérifie si ces valeurs de données appartiennent bien à des groupes de données différents.

La personne du métier saura trouver d'autres moyens de vérifier la liste L200.

Si la ou les vérifications mises en oeuvre indiquent que la liste L200 reçue n'est pas conforme selon un ou plusieurs critères (sortie F de l'étape 208), alors l'étape suivante est l'étape 204, sinon le procédé d'authentification continue.

A une étape 209 (Choose k data), successive à l'étape 208, mise en oeuvre par le dispositif V, le dispositif vérificateur V choisit k données parmi l'image f(M200) de la liste M200 fournie par le dispositif prouveur P à l'étape 202, k étant un entier compris entre 1 et l'entier s-1. Dit autrement, le dispositif vérificateur V génère une liste I200 de k indices de données. On appelle ici indice d'une donnée le numéro de la ligne et le numéro de la colonne correspondant à la donnée dans la matrice représentant la liste M200 ou l'image f(M200). Autrement dit, l'indice d'un groupe de données est donné par les valeurs des entiers i et j, définis précédemment, qui lui sont associées. Les données choisies par le dispositif vérificateur ne peuvent pas appartenir à des groupes de données déjà utilisées par le dispositif prouveur lors de la mise en oeuvre de précédents procédés d'authentification. Autrement dit, les numéros de ligne des données choisies ne peuvent pas correspondre à des numéros de ligne présents dans la liste L200.

Selon un autre mode de réalisation, la liste I200 ne comprend pas les index de données, mais comprend seulement des valeurs des images, par la fonction f, de données. De manière générale, on peut dire que la liste I200 comprend une partie d'informations relatives à des données à utiliser.

A une étape 210 (Send indexes), successive à l'étape 209, mise en oeuvre par le dispositif V, le dispositif vérificateur V envoie la liste I200 au dispositif prouveur P.

A une étape 211 (Prep k data), successive à l'étape 210, mise en oeuvre par le dispositif P, le dispositif prouveur P reçoit la liste I200 et prépare les k données de la liste M200 correspondant aux index de la liste I200. Dit autrement, le dispositif prouveur P sélectionne le ou les groupes de données choisi par le dispositif vérificateur V, et choisit dans ce ou ces groupes les données sélectionnées par le dispositif vérificateur V. On dit par la suite qu'à l'étape 211, le dispositif prouveur P prépare une liste M(I200) de données de la liste M200 correspondant aux index de la liste I200.

Selon une variante, à l'étape 211, le dispositif P peut vérifier la liste I200 qu'il a reçu, et arrêter le procédé si celle-ci n'est pas conforme.

A une étape 212 (Erase), successive à l'étape 210, mise en oeuvre par le dispositif P de façon simultanée avec l'étape 211, le dispositif prouveur P efface les données du ou des groupes, ou tuples, choisis par le dispositif vérificateur V qui n'ont pas été sélectionnées par le dispositif vérificateur V. Dit autrement, le dispositif prouveur P efface de la liste M200 toutes les données du ou des groupes choisis dont les index ne sont pas dans la liste I200.

Selon une variante de réalisation, à l'étape 212, le dispositif prouveur P efface de la liste M200 toutes les données du ou des groupes choisis par le dispositif vérificateur V. En pratique, les données qui sont à envoyer au dispositif vérificateur V ne sont supprimées qu'après leur envoi.

A une étape 213 (Send k data), successive à l'étape 212, mise en oeuvre par le dispositif P, le dispositif prouveur P envoie au dispositif vérificateur V la liste M(I200) de données demandée.

A une étape 214 (Cnt ++), successive à l'étape 213, mise en oeuvre par le dispositif P, le dispositif prouveur P incrémente la valeur Cnt200 de son compteur interne. Selon une variante, l'étape 214 peut être mise en oeuvre de façon simultanée avec l'étape 211 ou avec l'étape 213.

A une étape 215 (Verify), successive à l'étape 213, mise en oeuvre par le dispositif V, le dispositif vérificateur V reçoit la liste M(I200) des k données demandées et vérifie leur conformité. Pour cela, le dispositif vérificateur V utilise la fonction f et l'applique à chacune des données de la liste M(I200). Puis, le dispositif vérificateur V compare les images par la fonction f des données de la liste M(I200) avec les données de l'image f(M200) sélectionnées grâce aux index de la liste I200.

Si la ou les vérifications mises en oeuvre indiquent que l'une des données reçues n'est pas conforme (sortie F de l'étape 215), alors l'étape suivante est l'étape 204, sinon l'étape suivante est une étape 216 (Success).

A l'étape 216, mise en oeuvre par le dispositif V, le dispositif vérificateur V a bien vérifié toutes les données fournies par le dispositif prouveur P, toutes ces données sont correctes. Le dispositif prouveur P est alors authentifié auprès du dispositif vérificateur V, la mise en oeuvre du procédé d'authentification est un succès. Selon un exemple, l'étape 214 est mise en oeuvre par le dispositif prouveur P après l'étape 216.

Un avantage de ce mode de réalisation est que supprimer une partie des données non utilisées de la liste M200 permet d'éviter qu'un dispositif électronique malveillant prenne la place du dispositif prouveur P. En effet, un tel dispositif malveillant n'ayant pas la liste de données M200 ne pourra pas la reconstruire en totalité à partir des données potentiellement divulguées aux étapes 213 de mise en oeuvre successives du procédé d'authentification 200, puisqu'une partie des données d'un groupe de données est supprimée sans jamais être communiquée.

La figure 3 est un schéma bloc illustrant un exemple de mise en oeuvre d'un procédé de certification 300 d'un dispositif électronique, comme le dispositif prouveur P (Prover) de la figure 2, auprès d'un dispositif électronique C (Certificate), aussi appelé dispositif certificateur C. Autrement dit, le procédé 300 est adapté à être utilisé pendant l'étape 201 décrite en relation avec la figure 2.

A une étape initiale 301 (Gen M), mise en oeuvre par le dispositif P, le dispositif prouveur P génère une liste M300 de groupes de données du type de la liste M200 décrite en relation avec la figure 2. Autrement dit, le dispositif P génère une liste M300 de s groupes de données. Chaque groupe de la liste M300 comprend t données. Les entiers s et t étant identiques à ceux définis en relation avec la figure 2.

A une étape 302 (Apply f), successive à l'étape 301, mise en oeuvre par le dispositif P, le dispositif P utilise la fonction f définie en relation avec la figure 2 et l'applique à la liste M300 pour obtenir une image f(M300). L'image f(M300) est du type de l'image f(M200) décrite en relation avec la figure 2. Autrement dit, la fonction f est appliquée à chaque donnée des groupes de données de la liste M300.

A une étape 303 (Send f(M)), successive à l'étape 302, mise en oeuvre par le dispositif P, le dispositif prouveur P envoie l'image f(M300) au dispositif certificateur C. Selon un exemple, le dispositif prouveur P envoie, en outre, une donnée d'identification IdP300, ou identifiant IdP300, au dispositif certificateur C.

A une étape 304 (Verif f(M)), successive à l'étape 303, mise en oeuvre par le dispositif C, le dispositif certificateur C a reçu l'image f(M300), et, le cas échéant, l'identifiant IdP300, et entame une ou plusieurs opérations de vérification de ces données.

Selon un premier exemple, le dispositif certificateur C peut vérifier que la fonction f a été correctement appliquée, par exemple en analysant le format des données fournies par le dispositif prouveur P.

Selon un autre exemple, le dispositif certificateur C vérifie si l'identifiant IdP300 ne fait pas partie d'une liste d'identifiants pour lesquels il est interdit de fournir une donnée de certification.

Si la ou les vérifications mises en oeuvre indiquent que l'une des données reçues n'est pas conforme selon un ou plusieurs critères (sortie F de l'étape 304), alors l'étape suivante est une étape 305 (Fail), sinon l'opération de certification continue.

A l'étape 305, le dispositif certificateur C a déterminé qu'une étape de vérification avait donné un résultat négatif. Cela indique qu'au moins une des données fournies par le dispositif P n'est pas conforme et que la certification du dispositif P n'est pas possible. Le procédé de certification 300 s'arrête donc et se conclut par un échec de la certification du dispositif P.

A une étape 306 (Verif f(M)), successive à l'étape 304, mise en oeuvre par le dispositif C, les données de l'image f(M300) ont été reconnues comme conformes par le dispositif certificateur C. Le dispositif certificateur C prépare donc une donnée de certification C300. Pour cela, selon un exemple, le dispositif certificateur C utilise les données de l'image f(M300) et, le cas échéant, l'identifiant IdP300. Selon un exemple, le dispositif certificateur C obtient le certificat C en appliquant aux données de l'image f(M300) et, le cas échant à l'identifiant IdP300, une fonction de signature.

A une étape 307 (Verif f(M)), successive à l'étape 306, mise en oeuvre par le dispositif C, le dispositif certificateur envoie au dispositif prouveur P le certificat C300. Le dispositif prouveur P est à présent certifié.

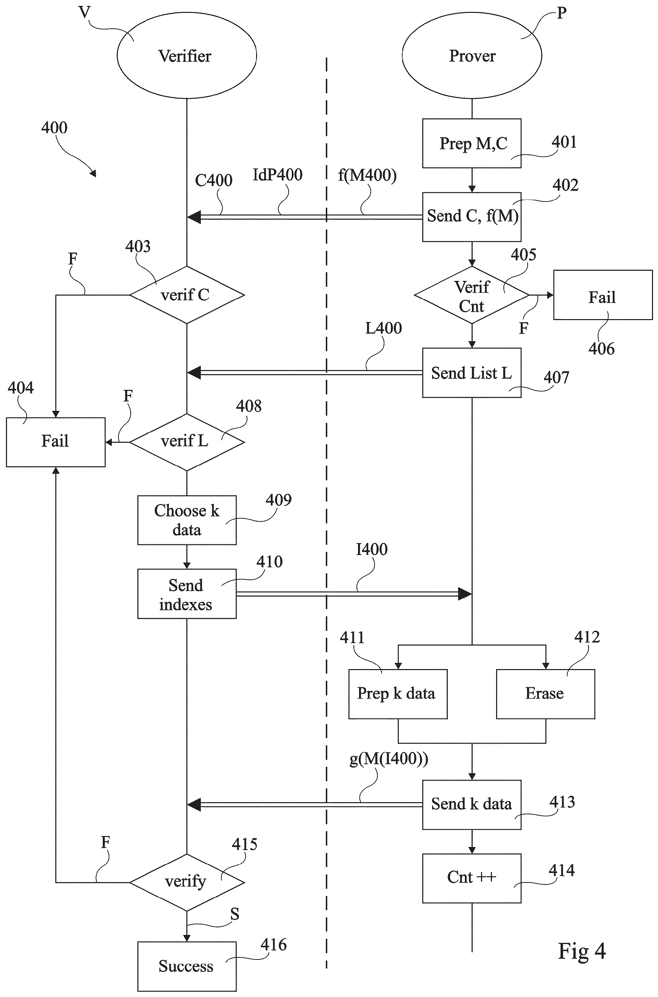

La figure 4 est un schéma bloc illustrant un deuxième mode de mise en oeuvre d'un procédé d'authentification 400 permettant d'authentifier un premier dispositif électronique P, appelé dispositif prouveur P (Prover), auprès d'un deuxième dispositif électronique V (Verifier), appelé dispositif vérificateur V. Autrement dit, le procédé d'authentification 400 est adapté à être mis en oeuvre par un système d'authentification comprenant les dispositifs P et V. Selon un mode de réalisation, les dispositifs P et V sont du type du dispositif 100 décrit en relation avec la figure 1.

Le procédé d'authentification 400 est un procédé de type Vérificateur/Prouveur.

Le procédé d'authentification 400 est similaire au procédé d'authentification 200 décrit en relation avec la figure 2. Les éléments communs aux procédés 200 et 400 ne sont pas décrits de nouveau en détail. Seules les différences entre les procédés 200 et 400 sont mises en exergue.

Plus particulièrement, le procédé 400 est une application particulière du procédé 200 pour laquelle les données générées par le dispositif prouveur P sous la forme d'une liste M400 sont des données secrètes, et pour laquelle une deuxième fonction g est utilisée pour prouver au dispositif vérificateur V la connaissance des données de la liste M400 demandées.

Une étape initiale 401 (Prep M, C), mise en oeuvre par le dispositif P, est une étape de préparation de données utilisées pour les étapes successives du procédé 400. Cette étape peut être mise en oeuvre une fois puis peut servir pour plusieurs mises en oeuvre du procédé d'authentification 400.

Selon un mode de réalisation, pendant cette étape initiale 401, le dispositif prouveur P génère des données lui permettant de mettre en oeuvre le procédé d'authentification 400. Plus particulièrement, le dispositif P génère une liste M400 de s groupes de données, aussi appelés tuples de données, s étant un entier supérieur ou égale à un. Chaque groupe de la liste M400 comprend t données, t étant un entier strictement supérieur à un. A titre d'exemple, les données comprises dans la liste M400 sont des données binaires.

Comme la liste M200 décrite en relation avec la figure 2, la liste M400 peut être représentée sous forme d'une matrice donnée par la formule mathématique suivante :

[Math 4]

$$M = \left(m400_{ij}\right)_{0 \leq i \leq s-1, 0 \leq j \leq t-1}$$

Selon un mode de réalisation, les données de la liste M400 sont des données secrètes dont les valeurs ne doivent pas être révélées. Selon un exemple, les données de la liste M400 sont des clés de signature.

Le dispositif prouveur P est, en outre, adapté à mettre en oeuvre la fonction f. La fonction f a déjà été décrite en relation avec la figure 2. Selon un exemple particulier, la fonction f peut être une fonction permettant d'obtenir une clé publique de signature à partir d'une clé privée de signature.

Le dispositif prouveur P est, en outre, adapté à mettre en oeuvre une fonction g. Selon un exemple, la fonction g est une fonction de signature permettant de fournir une signature à partir d'une clé privée. Selon un exemple particulier, la fonction g est une fonction de signature basée, par exemple, sur l'exponentiation modulaire ou la multiplication scalaire sur une courbe elliptique. D'autres exemples de fonction g sont à la portée de la personne du métier. Selon un autre mode de réalisation, la fonction g est la fonction identité, dans ce cas le procédé 400 est identique au procédé 200.

De plus, pendant cette étape initiale 401, le dispositif prouveur P peut générer une image f(M400) des données de la liste M400 par la fonction f. Selon un exemple, l'image f(M400) représente des clés publiques associées aux clés privées de la liste M400. Pour cela, la fonction f est appliquée à chaque donnée des groupes de données de la liste M400. Ainsi, l'image f(M400) de la liste M400 peut être représentée par la formule mathématique suivante :

[Math 5]

$$f(M) = \left(f(m400_{ij})\right)_{0 \le i \le s-1, 0 \le j \le t-1}$$

De plus, pendant cette étape initiale 401, le dispositif prouveur P peut, par exemple, se faire certifier par un dispositif certificateur, par exemple par un procédé de certification du type de celui décrit en relation avec la figure 3. A l'issue d'une opération de certification, le dispositif P obtient une donnée de certification C400, ou certificat C400.

A une étape 402 (Send C), successive à l'étape 401, mise en oeuvre par le dispositif P, le procédé d'authentification 400 commence par l'envoi de données par le dispositif prouveur P au dispositif vérificateur V. Selon un exemple, le dispositif P envoie son identifiant IdP400, son certificat C400 et l'image f(M400) de la liste M400 par la fonction f.

A une étape 403 (Verif C, f(M)), successive à l'étape 402, mise en oeuvre par le dispositif V, le dispositif V reçoit les données envoyées à l'étape 402, c'est-à-dire l'identifiant IdP400, le certificat C400 et l'image f(M400), et effectue une vérification de ces données. La ou les opérations de vérification mise en oeuvre à l'étape 403 sont du type de la ou des opérations de vérification mise en oeuvre à l'étape 203 du procédé 200. Si la ou les vérifications mises en oeuvre indiquent que l'une des données reçues n'est pas conforme (sortie F de l'étape 403), alors l'étape suivante est une étape 404 (Fail), sinon le procédé d'authentification continue.

A l'étape 404, mise en oeuvre par le dispositif V, le dispositif V a déterminé qu'une étape de vérification avait donné un résultat négatif. Cela indique qu'au moins une des données fournies par le dispositif P n'est pas conforme et que l'authentification du dispositif P n'est pas possible auprès du dispositif V. Le procédé d'authentification s'arrête donc et se conclut par un échec de l'authentification du dispositif P auprès du dispositif V.

A une étape 405 (Verif Cnt), successive à l'étape 402, mise en oeuvre par le dispositif P, le dispositif P vérifie la valeur Cnt400 d'un compteur interne. Ce compteur interne permet de suivre le nombre de fois que le dispositif P met en oeuvre le procédé d'authentification 400. Ainsi, à chaque fois que le dispositif P met en oeuvre, avec succès, le procédé d'authentification 400 il incrémente la valeur Cnt400 du compteur interne.

Selon une variante de réalisation, le compteur interne pourrait permettre de suivre le nombre de fois que le dispositif P met en oeuvre le procédé d'authentification 200 avec ou sans succès. Ainsi, à chaque fois que le dispositif P met en oeuvre le procédé d'authentification 400 et utilise un ou plusieurs secrets, le compteur peut être incrémenté.

Ainsi, à l'étape 405, le dispositif P vérifie que la valeur Cnt400 ne dépasse pas une valeur maximale Cnt400Max. Si la valeur Cnt400 est égale ou supérieure à la valeur maximale Cnt400Max (sortie F de l'étape 405), alors l'étape suivante est une étape 406 (Fail), sinon le procédé d'authentification continue.

Selon une variante de réalisation, l'étape 405 peut être mise en oeuvre à d'autres moments du procédé d'authentification 400, comme par exemple, avant l'exécution de l'étape 402, après l'exécution d'une étape 407 décrite ci-après, ou avant l'exécution d'une étape 413 décrite ci-après.

A l'étape 406, mise en oeuvre par le dispositif P, le dispositif P a déterminé qu'il avait mis en oeuvre le procédé d'authentification trop de fois. L'authentification du dispositif P n'est pas possible auprès du dispositif V. Le procédé d'authentification s'arrête donc et se conclut par un échec de l'authentification du dispositif P auprès du dispositif V.

A une étape 407 (Send List L), successive à l'étape 405, mise en oeuvre par le dispositif P, le dispositif prouveur P envoie au dispositif vérificateur V une liste L400 permettant d'identifier des groupes de données de la liste M400 qui ont déjà été utilisés précédemment pour mettre en oeuvre le procédé d'authentification 400.

Selon un mode de réalisation, comme la liste L200 du procédé 200, la liste L400 comprend des index de groupes de données de la liste M400 déjà utilisés, mais peut comprendre aussi des valeurs de données de ces groupes déjà utilisées pour mettre en oeuvre le procédé d'authentification 400. Dans ce cas, on peut dire que la liste L400 comprend des couples comprenant chacun l'index d'un groupe de données déjà utilisé et la ou les valeurs des données dudit groupe de données déjà utilisées. Selon un exemple, les valeurs des données dudit groupe peuvent être des signatures générées à partir de clés privées.

A une étape 408 (Verif L), successive à l'étape 407, mise en oeuvre par le dispositif V, le dispositif vérificateur V a reçu la liste L400 et met en oeuvre une ou plusieurs opérations de vérification de cette liste L400. L'étape 408 est similaire à l'étape 208 du procédé 200, et met en oeuvre des opérations de vérification similaire. La personne du métier saura trouver d'autres moyens de vérifier la liste L400.

Si la ou les vérifications mises en oeuvre indiquent que la liste L400 reçue n'est pas conforme selon un ou plusieurs critères (sortie F de l'étape 408), alors l'étape suivante est l'étape 404, sinon le procédé d'authentification continue.

A une étape 409 (Choose k data), successive à l'étape 408, mise en oeuvre par le dispositif V, le dispositif vérificateur V choisit k données de l'image f(M400) de la liste M400 fournie par le dispositif prouveur P à l'étape 402, k étant un entier compris entre 0 et l'entier s. Dit autrement, le dispositif vérificateur V génère une liste I400 de k index de données.

A une étape 410 (Send indexes), successive à l'étape 409, mise en oeuvre par le dispositif V, le dispositif vérificateur V envoie la liste I400 au dispositif prouveur P.

A une étape 411 (Prep k data), successive à l'étape 410, mise en oeuvre par le dispositif P, le dispositif prouveur P reçoit la liste I400 et prépare les k données de la liste M400 correspondant aux index de la liste I400. Dit autrement, le dispositif prouveur P sélectionne le ou les groupes de données choisi par le dispositif vérificateur V, et choisit dans ce ou ces groupes les données sélectionnées par le dispositif vérificateur V. On dit par la suite qu'à l'étape 411, le dispositif prouveur P prépare une liste M(I400) de données de la liste M400 correspondant aux index de la liste I400.

De plus, et contrairement au procédé d'authentification 200, le dispositif prouveur P applique la fonction g à la liste M(I400) pour obtenir une image g(M(I400)). Pour cela, la fonction g est appliquée à chaque donnée de la liste M(I400). La fonction g a pour utilité ici d'empêcher de divulguer les données de la liste M400 lors de leur envoi au dispositif vérificateur V. De plus, selon un exemple, la fonction g est une fonction de génération d'une signature avec une clé privée, et le message à signer est fixe et prédéterminé à l'avance. Selon un autre exemple, le message à signé est choisi par le dispositif V.

A une étape 412 (Erase), successive à l'étape 410, mise en oeuvre par le dispositif P de façon simultanée avec l'étape 411, le dispositif prouveur P efface les données du groupe choisi par le dispositif vérificateur V qui n'ont pas été sélectionnée par le dispositif vérificateur V. Dit autrement, le dispositif prouveur P efface de la liste M400 toutes les données du groupe choisi dont les index ne sont pas dans la liste I400.

Selon une variante de réalisation, à l'étape 412, le dispositif prouveur P efface de la liste M400 toutes les données du groupe choisi par le dispositif vérificateur V.

A une étape 413 (Send k data), successive à l'étape 412, mise en oeuvre par le dispositif P, le dispositif prouveur P envoie au dispositif vérificateur V la liste g(M(I400)) de données demandée.

A une étape 414 (Cnt ++), successive à l'étape 413, mise en oeuvre par le dispositif P, le dispositif prouveur P incrémente la valeur Cnt400 de son compteur interne.

A une étape 415 (Verify), successive à l'étape 413, mise en oeuvre par le dispositif V, le dispositif vérificateur V reçoit la liste g(M(I400)) des k données demandées et vérifie leur conformité. Pour cela, le dispositif vérificateur V peut utiliser une fonction de vérification, différente de la fonction f et la liste f(I400) qui correspond, selon un exemple, à une liste de clés publiques. Selon un exemple, le vérificateur vérifie que les signatures de la liste g(M(I400)) sont correctes à partir des clés publiques de signature de la liste f(I400).

Si la ou les vérifications mises en oeuvre indiquent que l'une des données reçues n'est pas conforme (sortie F de l'étape 415), alors l'étape suivante est l'étape 404, sinon l'étape suivante est une étape 416 (Success).

A l'étape 416, mise en oeuvre par le dispositif V, le dispositif vérificateur V a bien vérifié toutes les données fournies par le dispositif prouveur P, toutes ces données sont correctes. Le dispositif prouveur P est alors authentifié auprès du dispositif vérificateur V, la mise en oeuvre du procédé d'authentification est un succès. Selon un exemple, l'étape 414 est mise en oeuvre par le dispositif prouveur P après l'étape 416.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

**Revendications**

1. Procédé d'authentification d'un premier dispositif (P) auprès d'un deuxième dispositif (V), le premier dispositif (P) stockant une première liste (M200 ; M400) de groupes de données, comprenant les étapes suivantes :

   A) Envoyer, par le deuxième dispositif (V) au premier dispositif (P), une deuxième liste (I200 ; I400) d'informations relatives à des données ;
   B) Envoyer, par le premier dispositif (P) au deuxième dispositif (V), une troisième liste (M(I200) ; M(I400), g(M(I400))) d'images, par une première fonction (g), de données de ladite première liste (M200 ; M400) dont les informations sont celles de ladite deuxième liste (I200 ; I400) ; et
   C) Vérifier, par le deuxième dispositif (V), si les images (f(M(I))) des données de ladite troisième liste (M(I200) ; M(I400), g(M(I400))) sont conformes aux données d'une quatrième liste (f(M200) ; f(M400)) de groupes de données correspondant à l'image de la première liste (M200 ; M400) par une deuxième fonction (f) dont les informations sont comprises dans la deuxième liste (I200 ; I400).

2. Dispositif électronique adapté à être le premier dispositif (P) dans un procédé d'authentification du premier dispositif (P) auprès d'un deuxième dispositif (V), le premier dispositif (P) stockant une première liste (M200 ; M400) de groupes de données, et ledit procédé comprenant les étapes suivantes :

A) Envoyer, par le deuxième dispositif (V) au premier dispositif (P), une deuxième liste (I200 ; I400) d'informations relatives à des données ;

B) Envoyer, par le premier dispositif (P) au deuxième dispositif (V), une troisième liste (M(I200) ; M(I400), g(M(I400))) d'images, par une première fonction (g), de données de ladite première liste (M200 ; M400) dont les informations sont celles de ladite deuxième liste (I200 ; I400) ; et

C) Vérifier, par le deuxième dispositif (V), si les images (f(M(I))) des données de ladite troisième liste (M(I200) ; M(I400), g(M(I400))) sont conformes aux données d'une quatrième liste (f(M200) ; f(M400)) de groupes de données correspondant à l'image de la première liste (M200 ; M400) par une deuxième fonction (f) dont les informations sont comprises dans la deuxième liste (I200 ; I400).

3. Dispositif électronique adapté à être le deuxième dispositif (V) dans le procédé d'authentification d'un premier dispositif (P) auprès du deuxième dispositif (V), le premier dispositif (P) stockant une première liste (M200 ; M400) de groupes de données, et ledit procédé comprenant les étapes suivantes :

A) Envoyer, par le deuxième dispositif (V) au premier dispositif (P), une deuxième liste (I200 ; I400) d'informations relatives à des données ;

B) Envoyer, par le premier dispositif (P) au deuxième dispositif (V), une troisième liste (M(I200) ; M(I400), g(M(I400))) d'images, par une première fonction (g), de données de ladite première liste (M200 ; M400) dont les informations sont celles de ladite deuxième liste (I200 ; I400) ; et

C) Vérifier, par le deuxième dispositif (V), si les images (f(M(I))) des données de ladite troisième liste (M(I200) ; M(I400), g(M(I400))) sont conformes aux données d'une quatrième liste (f(M200) ; f(M400)) de groupes de données correspondant à l'image de la première liste (M200 ; M400) par une deuxième fonction (f) dont les informations sont comprises dans la deuxième liste (I200 ; I400).

4. Procédé selon la revendication 1, ou dispositif selon la revendication 2, ou dispositif selon la revendication 3, dans lequel le procédé comprend, en outre, une étape D), précédant l'étape A), d'envoi, par le premier dispositif (P) au deuxième dispositif (V), de ladite quatrième liste (f(M200) ; f(M400)) de groupes de données.

5. Procédé selon la revendication 1 ou 4, ou dispositif selon la revendication 2 ou 4, ou dispositif selon la revendication 3 ou 4, dans lequel le procédé comprend, en outre, une étape E), adaptée à être exécutée entre les étapes B) et C), de suppression, par le premier dispositif (P), de ladite première liste (M200 ; M400) les groupes de données entiers des données dont les informations font partie de ladite troisième liste (M(I200) ; M(I400), g(M(I400))).

6. Procédé selon l'une quelconque des revendications 1, 4 ou 5, ou dispositif selon l'une quelconque des revendications 2, 4 ou 5, ou dispositif selon l'une quelconque des revendications 3 à 5, ou dispositif selon la revendication 3, dans lequel ladite deuxième liste (I200 ; I400) est une liste d'index de données.

7. Procédé selon l'une quelconque des revendications 1, 4 ou 5, ou dispositif selon l'une quelconque des revendications 2, 4 ou 5, ou dispositif selon l'une quelconque des revendications 3 à 5, dans lequel ladite deuxième liste (I200 ; I400) est une liste de valeurs de données.

8. procédé ou dispositif selon l'une quelconque des revendications 4 à 7, dans lequel ledit procédé comprend, entre l'étape D) et l'étape A), une étape F) dans laquelle ledit premier dispositif (P) envoie, au deuxième dispositif (V), une cinquième liste (L200 ; L400) d'informations relatives à des groupes de données de ladite quatrième liste (f(M200) ; f(M400)) qui ont déjà été utilisés pour mettre en oeuvre un procédé d'authentification, et à l'étape A) la deuxième liste (I200 ; I400) ne comprend pas d'information déjà comprise dans ladite cinquième liste (L200 ; L400) d'informations.

9. Procédé ou dispositif selon la revendication 8, dans lequel la cinquième liste (L200 ; L400) comprend des couples comprend un index de données et la valeur de ladite données associées audit index de données.

10. Procédé ou dispositif selon la revendication 8 ou 9, dans lequel ledit procédé comprend, en outre, après l'étape F), une étape G), mise en oeuvre par le deuxième dispositif (V), de vérification de ladite cinquième liste (L200 ; L400).

11. Procédé ou dispositif selon l'une quelconque des revendications 4 à 10, dans lequel, à l'étape D), le premier dispositif (P) envoie, en outre, un certificat (C200 ; C400), et dans lequel ledit procédé comprend, après l'étape D), une étape H), mise en oeuvre par ledit deuxième dispositif (V), de vérification dudit certificat (C200 ; C400).

12. Procédé selon l'une quelconque des revendications 1, 4 à 11, ou dispositif selon l'une quelconque des revendications 2, 4 à 11, ou dispositif selon l'une quelconque des revendications 3 à 11, dans lequel ledit premier dispositif (P) comprend un compteur (Cnt200 ; Cnt400) adapté à compter le nombre de fois que le premier dispositif (P) met en oeuvre ledit procédé d'authentification.

13. Procédé ou dispositif selon la revendication 12, dans lequel lorsque ledit compteur (Cnt200 ; Cnt400) dépasse une valeur maximale (Cnt200Max ; Cnt400Max), ledit premier dispositif (P) arrête la mise en oeuvre du procédé d'authentification et n'est pas authentifié auprès du deuxième dispositif (V).

14. Procédé ou dispositif selon la revendication 11 ou 12, dans lequel ledit deuxième dispositif (V) est adapté à vérifier la valeur dudit compteur (Cnt200 ; Cnt400).

15. Procédé selon l'une quelconque des revendications 1, 4 à 14, ou dispositif selon l'une quelconque des revendications 2, 4 à 14, ou dispositif selon l'une quelconque des revendications 3 à 14, dans lequel, si la vérification de l'étape C) est un succès alors le premier dispositif (P) est authentifié auprès du deuxième dispositif (V), et
si la vérification de l'étape C) n'est pas un succès alors le premier dispositif (P) n'est pas authentifié auprès du deuxième dispositif (V).

16. Système d'authentification comprenant un premier dispositif (P) selon l'une quelconque des revendications 2, 4 à 15 et un deuxième dispositif (V) selon l'une quelconque des revendications 3 à 15.

17. Produit programme d'ordinateur comprenant des instructions de code de programme pour l'exécution des étapes du procédé selon l'une quelconque des revendications 1, 4 à 15 en tant que le premier dispositif (P) et/ou en tant que le deuxième dispositif (V) lorsque ledit programme est exécuté sur un ordinateur.

Fig 1

Fig 2

Fig 3

V

Verifier

400

P

Prover

Prep M,C — 401

C400    IdP400    f(M400)

Send C, f(M) — 402

F

403

verif C

Verif Cnt — 405

Fail — 406

F

L400

Send List L — 407

404

Fail

F

408

verif L

409

Choose k data

I400

410

Send indexes

411

Prep k data

412

Erase

g(M(I400))

413

Send k data

Cnt ++ — 414

F

415

verify

S

416

Success

Fig 4

Europäisches
Patentamt

European
Patent Office

Office européen
des brevets

**RAPPORT DE RECHERCHE EUROPEENNE**

Numéro de la demande

EP 25 20 9204

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2009/187766 A1 (VUILLAUME CAMILLE [JP] ET AL) 23 juillet 2009 (2009-07-23) * abrégé * * alinéa [0001] - alinéa [0060]; revendications 1-18; figures 1-4 * ----- | 1-17 | INV. G06F21/44 H04L9/32 H04L9/40 H04W12/069 |
| A | US 2019/305969 A1 (IIJIMA ICHIRO [JP] ET AL) 3 octobre 2019 (2019-10-03) * abrégé * * alinéa [0004]; revendications 1-20; figures 1B-10 * * alinéa [0027] - alinéa [0058] * * alinéa [0078] - alinéa [0083] * ----- | 1-17 | |

| | | DOMAINES TECHNIQUES RECHERCHES (IPC) |
|---|---|---|
| | | G06F H04L H04W |

Le présent rapport a été établi pour toutes les revendications

| Lieu de la recherche | Date d'achèvement de la recherche | Examinateur |
|---|---|---|
| Munich | 27 octobre 2025 | Savvides, George |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
..........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 20 9204

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

27-10-2025

| Document brevet cité au rapport de recherche | Date de publication | Membre(s) de la famille de brevet(s) | Date de publication |
|---|---|---|---|
| US 2009187766 A1 | 23-07-2009 | CN 101488856 A | 22-07-2009 |
| | | EP 2081353 A2 | 22-07-2009 |
| | | JP 5525133 B2 | 18-06-2014 |
| | | JP 2009171292 A | 30-07-2009 |
| | | KR 20090079795 A | 22-07-2009 |
| | | US 2009187766 A1 | 23-07-2009 |
| US 2019305969 A1 | 03-10-2019 | AUCUN | |

EPO FORM P0460

Pour tout renseignement concernant cette annexe : voir Journal Officiel de l'Office européen des brevets, No.12/82